# EUROPEAN PATENT SPECIFICATION

(11) **EP 3 866 281 B1**
(45) Date of publication and mention of the grant of the patent: **14.10.2026**
(21) Application number: 21155149.4
(22) Date of filing: 04.02.2021
(51) Int. Cl.: H01M 50/583, H01M 50/581, H01H 85/02, H01H 85/00, H01H 85/20, H01R 13/688, H01M 50/543, H01M 50/298, H01R 13/50, B60R 16/023, B60R 16/02, H01R 11/32, H01R 13/52, H01R 11/28

(54) **BATTERY MOUNTED FUSE HOLDER**
BATTERIEMONTIERTER SICHERUNGSHALTER
PORTE-FUSIBLE MONTÉ SUR BATTERIE

(30) Priority: 13.02.2020 US 202016790343
(43) Date of publication of application: 18.08.2021
(73) Proprietor: AEES Inc., Farmington Hills, MI 48331 (US)
(72) Inventor: Ramunno, David A., Milford, MI 48381 (US); Wisneski, Todd, Novi, MI 48377 (US)
(74) Representative: Uexküll & Stolberg

(56) References cited:
- WO-A1-2016/144358
- US-A1- 2007 270 045
- US-A1- 2008 180 884
- US-A1- 2019 341 215
- US-B1- 10 511 129

## Description

### TECHNICAL FIELD

The present invention relates generally to wiring harnesses for vehicles and, more particularly, to a battery mounted assembly for holding a fuse for a vehicle.

### BACKGROUND

It is known to provide a fuse holder for a removable electrical fuse but there is a need in the art to include a wiring harness connector on a battery mounted fuse holder.

WO 2016/144358 A1 discloses a wiring harness assembly for serviceably housing at least one electrical fuse. The wiring harness assembly comprises: at least one electrical cable; a terminal housing including: a main body including a base, and further including a first side, a second side, a third side, and a fourth side, all extending from said base, wherein said base, said first side, said second side, said third side, and said fourth side collectively define a first cavity; a first terminal including a mounting end extending from said second side of said main body and being disposed outside of said first cavity, said mounting end being adapted for receiving a stud, and at least one first fuse contacting end disposed within said first cavity of said terminal housing; a plurality of second terminals each including a first end defining a second electrical connector extending from said first side of said main body, and at least one second fuse contacting end disposed within said first cavity of said terminal housing; wherein said first fuse contacting end of said first terminal and said second fuse contacting end of said second terminal are positioned within said first cavity parallel to and facing each other for receiving the electrical fuse; a cover removably mounted to said terminal housing to sealably cover said first cavity for protecting the electrical fuse within said first cavity; and a retaining system interconnecting said cover and said terminal housing to maintain connection of said cover to said terminal housing when said cover is removed from the terminal housing with said retaining system including a tether mounted to one of said cover and said terminal housing and an attachment fixture mounted to the other of said cover and said terminal housing. US 2008/180884 A1 discloses a connection of a similar terminal housing for fuses and having also a cover, wherein the connection with the cable is made through a connector formed on the side of the housing. US2007/270045 A1 discloses a wiring harness assembly for housing at least one electrical fuse, comprising a first terminal including a mounting end located within the cavity and a plurality of fuse contacting ends, and also a plurality of second terminals including on one side second fuse contacting means and on the opposite side including second electrical connectors, configured to be mated to a mating connector. Wherein a plurality of fuses are receive within each of the first and second fuse contacting ends and wherein the mating connector is received on the side opposite to the side in which the fuses are received.

### SUMMARY OF THE INVENTION

Accordingly, the present invention provides a wiring harness assembly for serviceably housing an electrical fuse comprising the features of claim 1. Preferred embodiments are set out in the dependent claims.

Advantages of the present disclosure will be readily appreciated as the same becomes better understood by reference to the following detailed description when considered in connection with the accompanying drawings.

### BRIEF DESCRIPTION OF THE DRAWINGS

Figure 1 is a partially schematic side view of a wiring harness assembly illustrated in operational relationship with a stud extending from a battery.
Figure 2 is a partially schematic side view of the wiring harness assembly of Figure 1 illustrated in operational relationship with a stud and a load.
Figure 3 is an exploded view of the wiring harness assembly of Figure 1.
Figure 4 is a side view of a terminal housing including a first terminal.
Figure 5 is a plan view of the terminal housing of Figure 4 including the first terminal and a second terminal.
Figure 6 is an offset cross-sectional view of the terminal housing including first terminal and the second terminal.
Figure 7 is a perspective view of the first terminal and a plurality of second terminals.
Figure 8 is a perspective view of a wiring harness plug.
Figure 9 is an end view of the wiring harness plug.
Figure 10 is an offset partial cross-sectional view of the wiring harness plug and the terminal housing.
Figure 11 is an end view of the terminal housing including a cover.
Figure 12 is a plan view of the terminal housing including the cover.
Figure 13 is a side view of the terminal housing including the cover.
Figure 14 is a perspective view of the terminal housing including the cover.
Figure 15 is another perspective view of the terminal housing including the cover.
Figure 16 is a partial cross-sectional view of the terminal housing including the cover and a sealing member.

### DETAILED DESCRIPTION

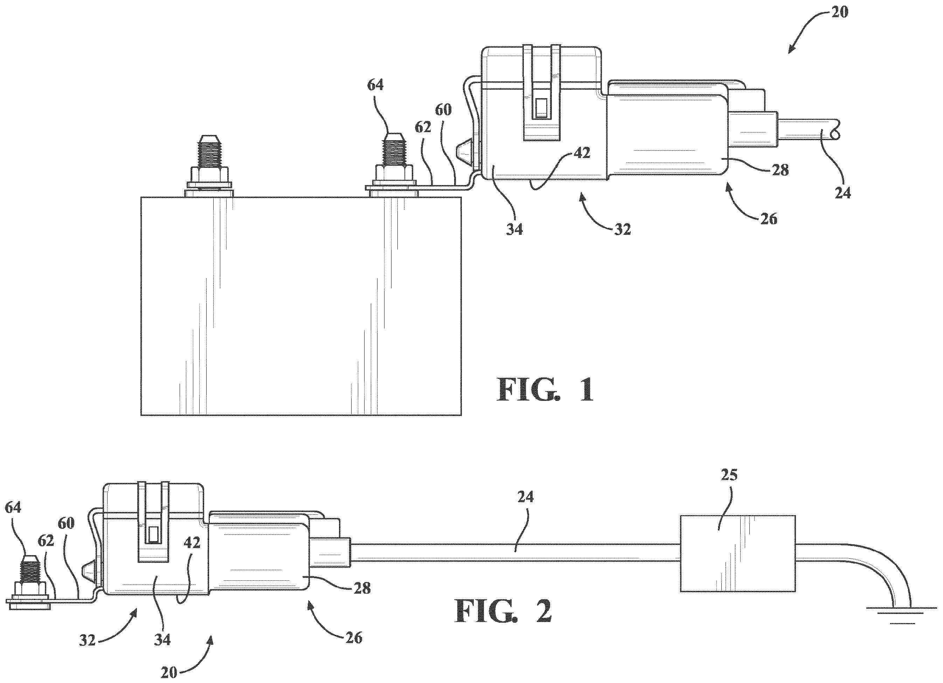

Figure 1 and Figure 2 show a wiring harness assembly 20 for serviceably housing at least one electrical fuse 22. In the illustrated embodiment, the wiring harness assembly 20 is coupled between an electrical cable 24 and a stud 64. The stud 64, for example, may be an energized stud extending from an electrical component of a vehicle (not shown), such as an alternator or battery. The electrical cable 24 may be connected to a load 25. It should be appreciated that the wiring harness assembly 20 may be used in other embodiments for the vehicle other than the electrical cable 24 and the stud 64.

With reference to Figures 1-3, the wiring harness assembly 20 includes at least one electrical cable 24 and a wiring harness plug 26 mounted to the cable 24. The wiring harness assembly 20 also includes a terminal housing 32 including a main body 34 defining a first cavity 36 and a receptacle 38 defining a second cavity 40. The main body 34 of the terminal housing 32 includes a base 42, a first side 44 and a second side 46 spaced apart from each other and extending perpendicularly from the base 42, and a third side 48 and a fourth side 50 spaced apart from each other, perpendicular to the first side 44 and the second side 46, and extending perpendicularly from the base 42. Collectively, the first side 44, second side 46, third side 48, and fourth side 50 form a generally rectangular cross section extending from the base 42 to define the main body 34 and the first cavity 36. It is contemplated that the receptacle 38 may have a variety of dimensions (such as various depths, aspect ratios) and internal features (such as ribs for structural integrity).

The receptacle 38 of the terminal housing 32 includes a top side 52 and a bottom side 54 spaced apart from each other and extending perpendicularly from the first side 44 of the main body 34, and a left side 56 and a right side 58 spaced apart from each other, perpendicular to the top side 52 and the bottom side 54, and extending perpendicularly from the first side 44 of the main body 34. Collectively, the top side 52, bottom side 54, left side 56, and right side 58 form a generally rectangular cross section extending from the first side 44 of the main body 34 to define the receptacle 38 and the second cavity 40. It is contemplated that the receptacle 38 may have a variety of dimensions (such as various depths, aspect ratios) and internal features (such as ribs for structural integrity).

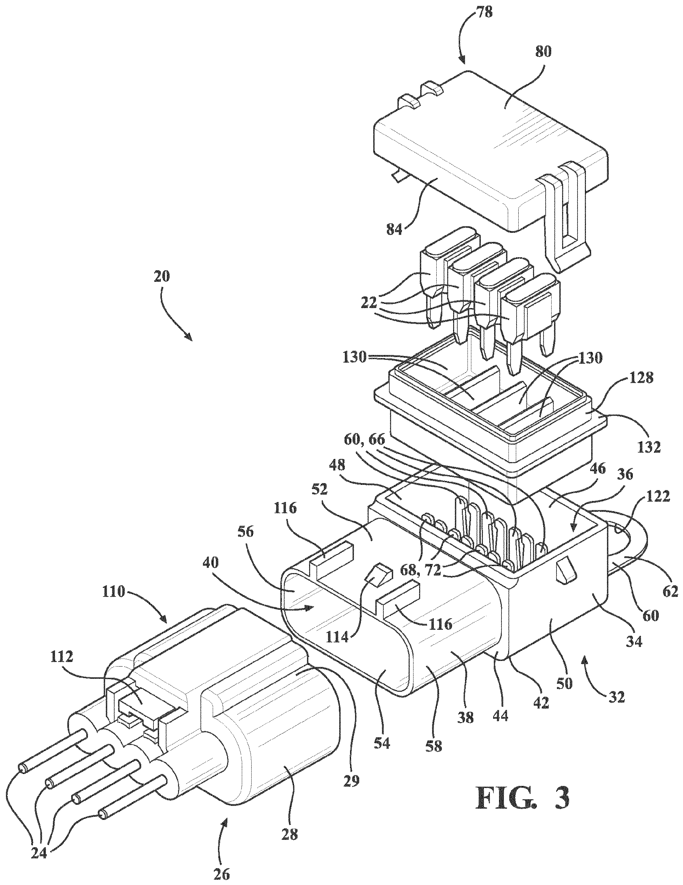

With references to Figures 3-6, the wiring harness assembly 20 includes a first terminal 60. The first terminal 60 includes at least one first fuse contacting end 66 disposed within the first cavity 36 of the terminal housing 32 and a mounting end 62 extending from the housing 32. The mounting end 62 may define an aperture 122. The aperture 122 may be open ended, generally circular in shape, or may have any suitable shape and may be configured to receive the stud 64. The wiring harness assembly 20 also includes at least one second terminal 68 including a first end defining a second electrical connector 72 disposed within the second cavity 40 of the terminal housing 32, and at least one second fuse contacting end 76 disposed within the first cavity 36 of the terminal housing 32.

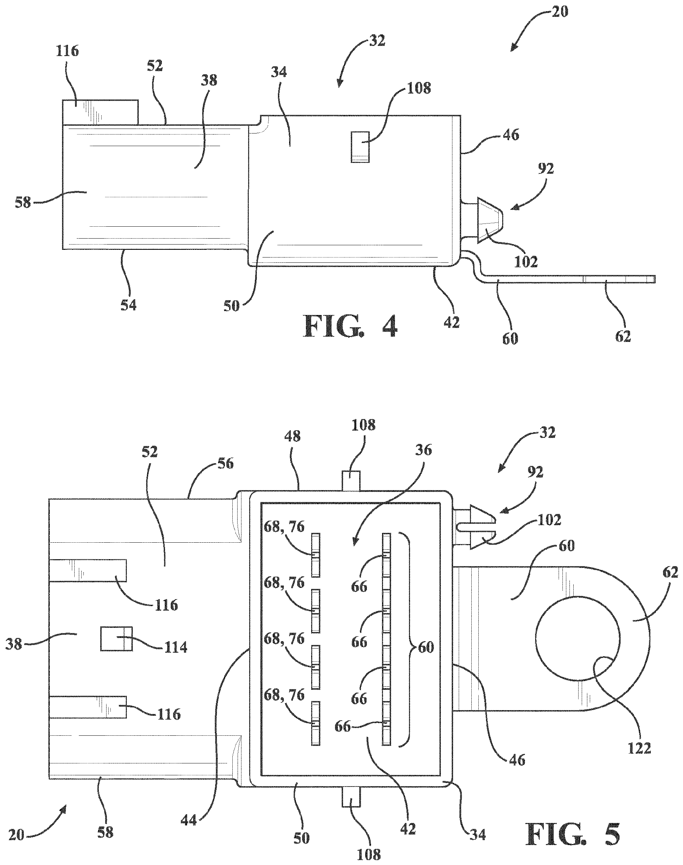

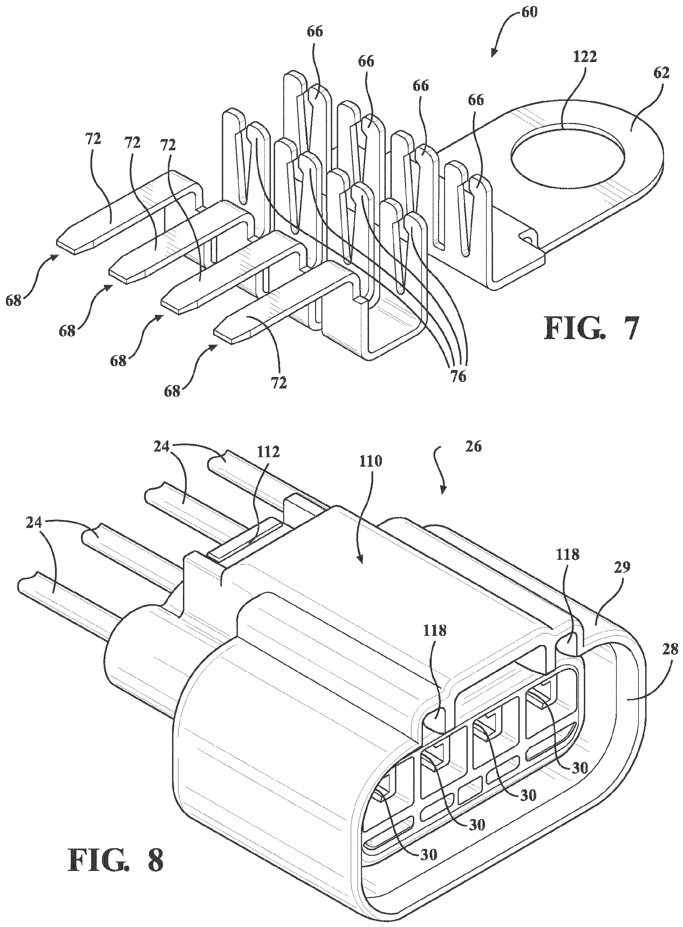

Referring to Figure 5 and Figure 7, in one embodiment the at least one second terminal 68 may be defined as a plurality of the second terminals 68 wherein each of the second fuse contacting ends 76 are spaced apart from each other for receiving a plurality of electrical fuses 22 and each of the second electrical connectors 72 are spaced apart from each other such that the plurality of second terminals 68 are parallel to each other.

With reference to Figure 7, which illustrates the first terminal 60 and second terminal(s) 68 with the terminal housing 32 hidden, in one embodiment, the at least one first fuse contacting end 66 of the first terminal 60 may be further defined as a plurality of first fuse contacting ends 66, with each of the first fuse contacting ends 66 being spaced apart from each other for receiving a plurality of electrical fuses 22. Also, in one embodiment, the plurality of the first fuse contacting ends 66 and the mounting end 62 may be integrally connected, and the mounting end 62 of the first terminal 60 may be further defined as a single mounting end 62 for receiving the stud 64. In other words, the plurality of the first fuse contacting ends 66 and the single mounting end 62 define the single first terminal 60 that is capable of receiving a plurality of fuses 22 using the plurality of first fuse contacting ends 66.

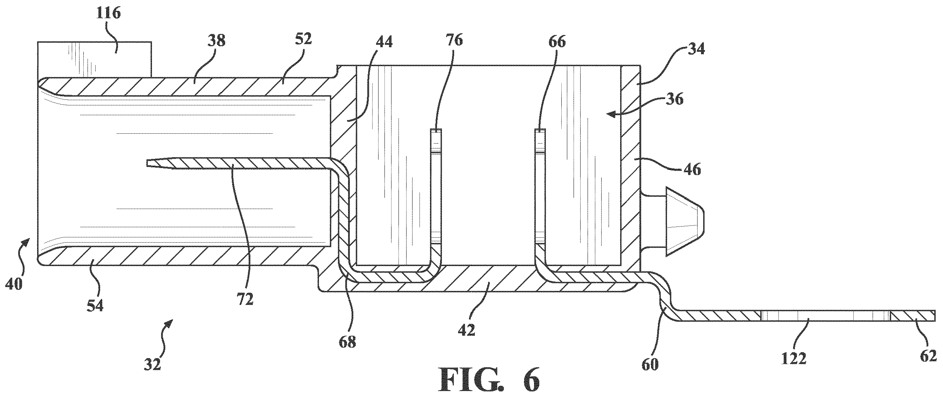

Referring to Figures 5-7, the first fuse contacting end(s) 66 of the first terminal 60 and the second fuse contacting end(s) 76 of the second terminal(s) 68 are positioned within the first cavity 36 parallel to and facing each other for receiving the electrical fuse 22. Particularly, Figures 5-7 illustrate that the first fuse contacting end(s) 66 and the second fuse contacting end(s) 76 are arranged within the first cavity 36 such that the first fuse contacting end(s) 66 and the second fuse contacting end(s) 76 are parallel to each other as well as the first side 44 and second side 46 of the main body 34. Furthermore, Figures 5 and 6 illustrates that the first fuse contacting end(s) 66 and the second fuse contacting end(s) 76 are spaced apart from and facing each other within the first cavity 36 such that the first fuse contacting end(s) 66 and the second fuse contacting end(s) 76 are capable of receiving one or more fuses 22. The first terminal 60 and second terminal(s) 68 may be installed in the terminal housing using a variety of methods. For example, the terminal housing 32 may be overmolded over the first terminal 60 and second terminal(s) 68.

Referring to Figures 8-10, the wiring harness plug 26 may be mounted to the electrical cable 24 in any suitable fashion. For example, the wiring harness plug 26 may be overmolded over the electrical cable 24. Alternatively, the wiring harness plug 26 may be configured to assemble over the electrical cable 24, for example, as a clamshell configuration. The wiring harness plug 26 includes a harness housing 28 and a first electrical connector 30. The first electrical connector 30 may include at least one biased prong 120 configured to receive and selectively retain the second electrical connector(s) 72 such that the first electrical connector(s) 30 and second electrical connector(s) 72 are engaged in electrical communication. The harness housing 26 may include seals at various locations (such as where the electrical cable enters the harness housing, or where the receptacle engages the harness plug) to ensure that debris and liquid does not penetrate the electrical components.

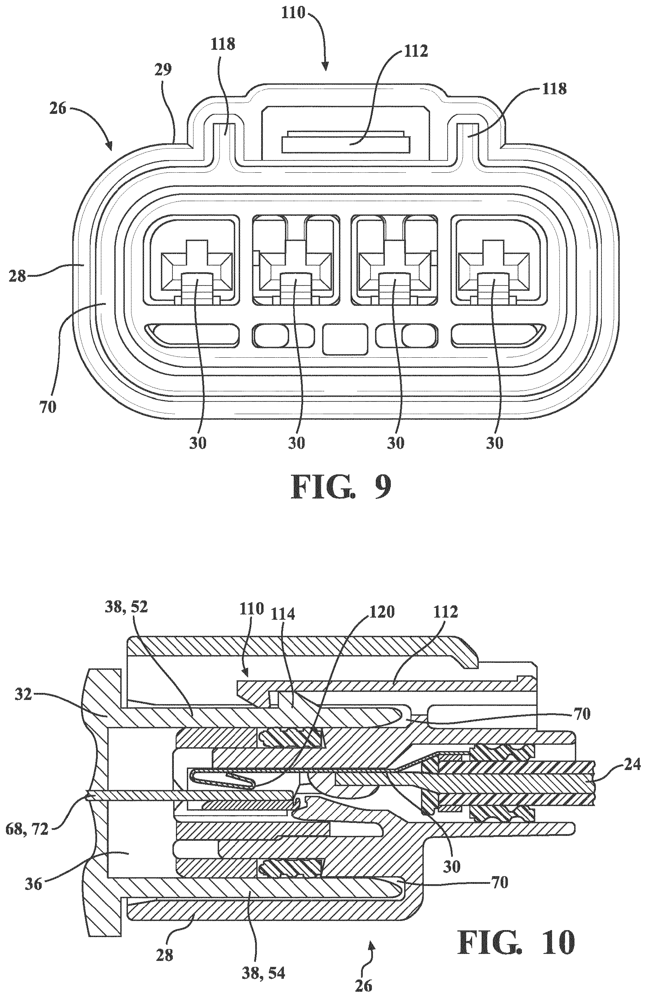

Referring to Figure 9, the harness housing 28 may define a generally rectangular slot 70 configured to engage the receptacle 38. As shown in Figure 10, the receptacle 38 of the terminal housing 32 may engage the slot 70 of the wiring harness plug 26 with the first electrical connector(s) 30 and second electrical connector(s) 72 engaging each other to couple the cable 24 with the second terminal(s) 68 in electrical communication. In other words, the receptacle 38 is configured to engage the wiring harness plug 26 such that the "female" first electrical connector(s) 30 may receive the "male" second electrical connector(s) 72 to engage each other in electrical communication, facilitating the transfer of power between the second terminal 68 and the electrical cable 24.

With continued reference to Figure 3 and Figures 8-10, to facilitate the receptacle 38 engaging the wiring harness plug 26, the receptacle 38 may include one or more alignment ribs 116 and the harness housing 28 may include one or more grooves 118 corresponding to the alignment ribs 116, wherein the grooves 118 are configured to receive the alignment ribs 116 to align the receptacle 38 and the slot 70 of the wiring harness plug 26 for engagement such that the first electrical connector(s) 30 and second electrical connector(s) 72 are also aligned for engagement.

Referring again to Figure 3 and Figures 8-10, the wiring harness plug 26 and the receptacle 38 may include a clip system 110 configured to selectively secure the wiring harness plug 26 to the receptacle 38. The clip system 110 may include a clip 112 disposed on the wiring harness plug 26 and a clip receiving member 114 disposed on the receptacle 38, wherein the clip 112 and the clip receiving member 114 are capable of being coupled such that the wiring harness plug 26 is selectively secured to the receptacle 38. For example, the clip 112 may be disposed on a top surface 29 of the harness housing 28, and the clip receiving member 114 may be disposed on the top side 52 of the receptacle 38. Advantageously, the wiring harness plug 26 and the clip system 110 provide a secure, removable connection for selectively coupling the electrical cable 24 with the terminal housing 32.

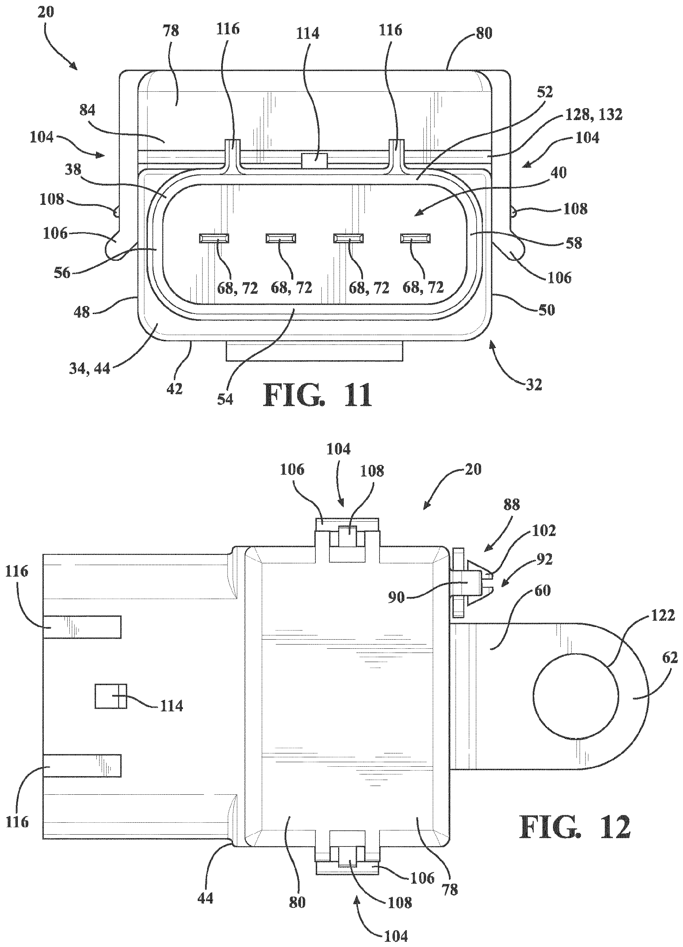

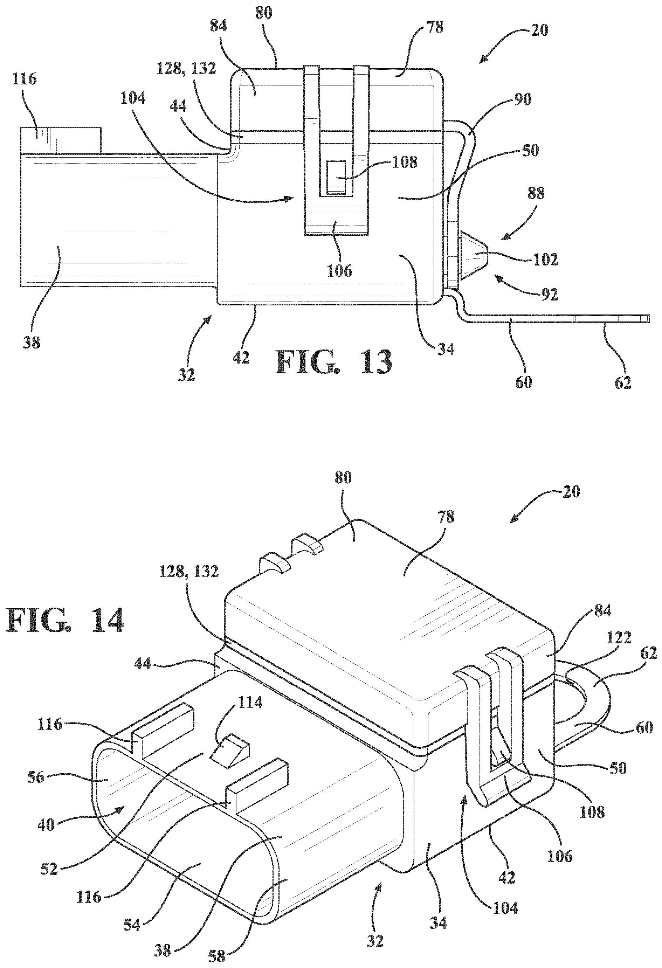

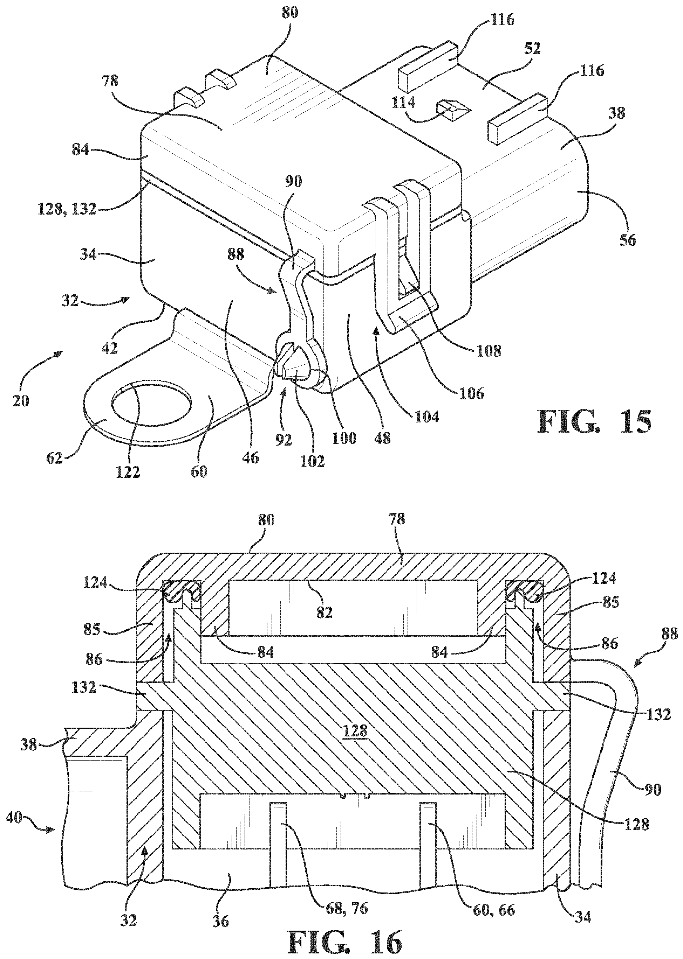

Referring to Figures 11-15, the wiring harness assembly 20 includes a cover 78 removably mounted to the terminal housing 32 to sealably cover the first cavity 36 for protecting the electrical fuse 22 within the first cavity 36. The cover 78 includes an upper face 80, a lower face 82 opposing the upper face 80, an inner wall 84 and an outer wall 85 extending from the lower face 82 and defining a channel 86 around a perimeter of the lower face 82. The cover 78 may be removably mounted to the terminal housing 32 using a latching system 104. The latching system 104 may include a latch 106 disposed on the cover 78 and a latch receiving member 108 disposed on the main body 34 of the housing 32. For example, the latch 106 may extend from the outer wall 85, and the latch receiving member 108 may be disposed on the third side 48 and/or fourth side 50 of the main body 34 of the terminal housing 32 (shown in Figures 14 and 15). In other words, the latching system 104 is arranged on a side of the terminal housing 32 orthogonal from the first face 44 of the housing 32 including receptacle 38, as the first side 44 would not have enough space to accommodate the latching system 104. Advantageously, the latch 106 and the latch receiving member 108 are capable of being coupled such that the cover 78 may be removably coupled to the terminal housing 32 in a secure manner.

Referring to Figure 3 and Figure 16, the wiring harness assembly 20 further includes a fuse spacer 128 configured to be disposed within the first cavity 36 of the main body 34. The fuse spacer 128 includes defined compartments 130 for guiding the electrical fuse 22 into engagement with the first contacting ends 66 and second fuse contacting ends 76. Particularly, the defined compartments 130 are generally aligned with the first contacting ends 66 and second fuse contacting ends 76 for guiding the electrical fuse 22 into engagement with the first contacting ends 66 and second fuse contacting ends 76. Additionally, the fuse spacer 128 also includes a peripheral flange 132 configured to be arranged between the cover 78 and the main body 34. Particularly, the peripheral flange 132 is configured to be arranged between the outer wall 85 of the cover 78 and the rectangular cross section defined by the first side 44, second side 46, third side 48, and fourth side 50 of the main body 34.

Additionally, referring to Figure 16, the cover 78 includes a sealing member 124 to facilitate a seal between the cover 78 and the terminal housing 32. Particularly, the sealing member 124 may be disposed in the channel 86 defined by the inner wall 84 and the outer wall 85 the cover 78, such that the sealing member 124 abuts the inner wall 84 and the outer wall 85 of the cover 78. When the cover 78 is secured to the main body 34, the sealing member 124 is configured to abut the spacer 128 to form a seal. Similarly, a second sealing member (not shown) is also contemplated to be disposed between the main body 34 and the spacer 128 to form a seal therein.

Referring to Figures 11-15, the wiring harness assembly 20 further includes a retaining system 88 interconnecting the cover 78 and the terminal housing 32 to maintain connection of the cover 78 to the terminal housing 32 when the cover 78 is removed from the terminal housing 32. Advantageously, the cover 78 and the terminal housing 32 are interconnected so the cover 78 is not misplaced when the cover 78 is removed. The retaining system 88 may include a tether 90 mounted to one of the cover 78 and the terminal housing 32 and an attachment fixture 92 mounted to the other of the cover 78 and the terminal housing 32. Referring to Figure 15, the tether 90 may be integrally formed with the cover 78. Additionally, the tether 90 may define an opening 100 configured to receive the attachment fixture 92. As illustrated in Figure 4 and Figure 5, the attachment fixture 92 may include a barb 102 configured to engage the tether 90.

Several embodiments have been discussed in the foregoing description. However, the embodiments discussed herein are not intended to be exhaustive or limit the invention to any particular form. The terminology which has been used is intended to be in the nature of words of description rather than of limitation. Many modifications and variations are possible within the scope of the present invention as defined in the accompanying claims.

## Claims

1. A wiring harness assembly (20) for serviceably housing at least one electrical fuse (22), said wiring harness assembly (20) comprising:
at least one electrical cable (24);
a wiring harness plug (26) mounted to said cable (24) with said wiring harness plug (26) including a harness housing (28) and a first electrical connector (30);
a terminal housing (32) including:
a main body (34) including a base (42), and further including a first side (44) and a second side (46) spaced from each other, and a third side (48) and a fourth side (50) spaced apart from each other, perpendicular to the first side (44) and the second side (46), wherein the first side (44), the second side (46), the third side (48) and the fourth side (50) extend perpendicularly of from said base (42), wherein said first side (44), said second side (46), said third side (48), and said fourth side (50) collectively form a generally rectangular cross section extending from the base (42) to define the main body (34) and a first cavity (36) of the main body (34), and
a receptacle (38) having a top side (52) and a bottom side (54) spaced apart from each other, a left side (56) and a right side (58) spaced apart from each other, perpendicular to the top side (52) and the bottom side (54), wherein the top side(52), the bottom side (54), the left side (56) and the right side(58) extend perpendicularly from said first side (44) of said main body (34) and are disposed outside of said first cavity (36), wherein said top side (52), said bottom side (54), said left side (56), and said right side (58) collectively form a generally rectangular cross section extending from the first side (44) of the main body (34) to define the receptacle (38) and a second cavity (40) of the receptacle (38);
a first terminal (60) including a mounting end (62) extending from said second side (46) of said main body (34) and being disposed outside of said first cavity (36), said mounting end (60) being adapted for receiving a stud (64), and at least one first fuse contacting end (66) disposed within said first cavity (36) of said terminal housing (32);
a plurality of second terminals (68) each including a first end defining a second electrical connector (72) extending from said first side (44) of said main body (34) and disposed within said second cavity (40) of said terminal housing (32), and at least one second fuse contacting end (76) disposed within said first cavity (36) of said terminal housing (32);
wherein each of said second fuse contacting ends (76) are spaced apart from each other for receiving a plurality of electrical fuses (22) and each of said second electrical connectors (72) are spaced apart from each other;
wherein said first fuse contacting end (66) of said first terminal (60) and said second fuse contacting end (76) of said second terminal (68) are positioned within said first cavity (36) parallel to and facing each other for receiving the electrical fuse (22);
wherein said receptacle (38) of said terminal housing (32) receives said wiring harness plug (26) with said first and second electrical connectors (30, 72) engaging each other in electrical communication to electrically couple said cable (24) to said first and second terminals (60, 68);
wherein said at least one first fuse contacting end (66) is further defined as a plurality of fuse contacting ends (66), with each of said first fuse contacting ends (66) being spaced apart from each other for receiving a plurality of electrical fuses (22) with said plurality of said first fuse contacting ends (66) and said mounting end (62) being integrally connected; and
wherein said mounting end (62) of said first terminal (60) is further defined as a single mounting end (62) for receiving said stud (64);
a cover (78) removably mounted to said terminal housing (32) to sealably cover said first cavity (36) for protecting the electrical fuse (22) within said first cavity (36); and
a retaining system (88) interconnecting said cover (78) and said terminal housing (32) to maintain connection of said cover (78) to said terminal housing (32) when said cover (78) is removed from said terminal housing (32) with said retaining system (88) including a tether (90) mounted to one of said cover (78) and said terminal housing (32) and an attachment fixture (92) mounted to the other of said cover (78) and said terminal housing (32).

2. A wiring harness assembly (20) as set forth in claim 1, wherein said tether (90) is mounted to said cover (78) and said attachment fixture (92) is mounted to said terminal housing (32).

3. A wiring harness assembly (20) as set forth in claim 1, wherein said tether (90) defines an aperture (100) configured to receive said attachment fixture (92)[[)]].

4. A wiring harness assembly (20) as set forth in claim 1, further including a latching system (104) configured to selectively secure said cover (78) to said terminal housing (32).

5. A wiring harness assembly (20) as set forth in claim 4, wherein said latching system (104) includes a latch (106) disposed on said cover (78) and a latch receiving member (108) disposed on said terminal housing (32), wherein said latch (106) and said latch receiving member (108) are capable of being coupled such that said cover (78) is selectively secured to said terminal housing (32).

6. A wiring harness assembly (20) as set forth in claim 1, further including a clip system (110) configured to selectively secure said wiring harness plug (26) to said receptacle (38).

7. A wiring harness assembly (20) as set forth in claim 6, wherein said clip system (110) includes a clip (112) disposed on said wiring harness plug (26) and a clip receiving member (114) disposed on said receptacle (38), wherein said clip (112) and said clip receiving member (114) are capable of being coupled such that said wiring harness plug (26) is selectively secured to said receptacle (38).

8. A wiring harness assembly (20) as set forth in claim 1, wherein said receptacle (38) includes one or more alignment ribs (116) and wherein said harness housing (28) includes one or more grooves (118) corresponding to said alignment ribs (116), wherein said grooves (118) are configured to receive said alignment ribs (116) to align said receptacle (38) and said wiring harness plug (26) for engagement.

9. A wiring harness assembly (20) as set forth in claim 1, wherein said first electrical connector (30) includes at least one biased prong (120) configured to receive and selectively retain said second electrical connector (72) such that said first and second electrical connectors (30, 72) are engaged in electrical communication.

10. A wiring harness assembly (20) as set forth in claim 1, wherein said mounting end (62) defines an opening (122) configured to receive said stud (64).

11. A wiring harness assembly (20) as set forth in claim 1, wherein said cover (78) includes a sealing member (124) to facilitate a water tight seal between said cover (78) and said terminal housing (32).

12. A wiring harness assembly (20) as set forth in claim 1, further including a fuse spacer (128) disposed within said first cavity (36) with said fuse spacer (128) including defined compartments (130) for guiding the electrical fuse (22) into engagement with said first and second fuse contacting ends (66, 76).

## Patentansprüche

1. Kabelbaumaufbau (20) zur betriebsbereiten Unterbringung wenigstens einer elektrischen Sicherung (22), wobei der Kabelbaumaufbau (20) aufweist:
wenigstens ein elektrisches Kabel (24),
einen Kabelbaumstecker (26), der mit dem Kabel (24) verbunden ist, wobei der Kabelbaumstecker (26) ein Steckergehäuse (28) und einen ersten elektrischen Verbindungskontakt (30) umfasst,
ein Anschlussgehäuse (32) mit:
einem Hauptteil (34), das eine Basis (42) umfasst und weiterhin eine erste Seite (24) und eine zweite Seite (46), die auf Abstand zueinander liegen, und eine dritte Seite (48) und eine vierte Seite (50) umfasst, die auf Abstand zueinander und senkrecht zur ersten Seite (44) und zur zweiten Seite (46) liegen, wobei die erste Seite (44), die zweite Seite (46), die dritte Seite (48) und die vierte Seite (50) senkrecht zur Basis (42) verlaufen, wobei die erste Seite (44), die zweite Seite (46), die dritte Seite (48) und die vierte Seite (50) zusammen einen im Wesentlichen rechteckigen, von der Basis (42) vorstehenden Querschnitt bilden, um das Hauptteil (34) und einen ersten Hohlraum (36) des Hauptteils (34) zu definieren, und
einer Steckerbuchse (38) mit einer Oberseite (52), einer Unterseite (54), die auf Abstand zueinander liegen, einer linken Seite (56) und einer rechten Seite (58), die auf Abstand zueinander und senkrecht zur Oberseite (52) und zur Unterseite (54) verlaufend liegen, wobei die Oberseite (52), die Unterseite (54), die linke Seite (56) und die rechte Seite (58) senkrecht von der ersten Seite (44) des Hauptteils (34) ausgehen und außerhalb des ersten Hohlraums (36) angeordnet sind, wobei die Oberseite (52), die Unterseite (54), die linke Seite (56) und die rechte Seite (58) zusammen einen im Wesentlichen rechteckigen, von der ersten Seite (44) des Hauptteils (34) vorstehenden Querschnitt bilden, um die Steckerbuchse (38) und einen zweiten Hohlraum (40) der Steckerbuchse (38) zu definieren,
einen ersten Anschluss (60), der ein Montageende (62), das von der zweiten Seite (46) des Hauptteils (34) ausgeht und außerhalb des ersten Hohlraums (36) angeordnet ist, wobei das Montageende (60) dazu ausgestaltet ist, einen Bolzen (64) aufzunehmen, und wenigstens ein sicherungskontaktierendes Ende (66) umfasst, das innerhalb des ersten Hohlraums (36) des Anschlussgehäuses (32) angeordnet ist,
eine Mehrzahl von zweiten Anschlüssen (68), von denen jeder ein erstes Ende, das einen zweiten elektrischen Verbindungskontakt (72) definiert, der von der ersten Seite (44) des Hauptteils (34) ausgeht und innerhalb des zweiten Hohlraums (40) des Anschlussgehäuses (32) angeordnet ist, und wenigstens ein zweites, sicherungskontaktierendes Ende (76) umfasst, das innerhalb des ersten Hohlraums (36) des Anschlussgehäuses (32) angeordnet ist,
wobei jedes der zweiten sicherungskontaktierenden Enden (76) auf Abstand zu den anderen liegt, um eine Mehrzahl von elektrischen Sicherungen (22) aufzunehmen, und wobei jeder der zweiten elektrischen Verbindungskontakte (72) auf Abstand zu den anderen liegt,
wobei das erste sicherungskontaktierende Ende (66) des ersten Anschlusses (60) und das zweite sicherungskontaktierende Ende (76) des zweiten Anschlusses (68) innerhalb des ersten Hohlraums (36) parallel zueinander und einander zugewandt positioniert sind, um die elektrische Sicherung (22) aufzunehmen,
wobei die Steckerbuchse (38) des Anschlussgehäuses (32) den Kabelbaumstecker (26) aufnimmt, wobei die ersten und zweiten elektrischen Verbindungskontakte (30, 72) in elektrischer Verbindung aneinander anliegen, um das Kabel (24) elektrisch mit den ersten und zweiten Anschlüssen (60, 68) zu verbinden,
wobei das wenigstens eine erste sicherungskontaktierende Ende (66) weiterhin definiert ist als eine Mehrzahl von ersten sicherungskontaktierenden Enden (66), wobei jedes der ersten sicherungskontaktierenden Enden (66) auf Abstand zu den anderen liegt, um eine Mehrzahl von elektrischen Sicherungen (22) aufzunehmen, wobei die Mehrzahl von ersten sicherungskontaktierenden Enden (66) und das Montageende (62) integral miteinander verbunden sind, und
wobei das Montageende (62) des ersten Anschlusses (60) weiter definiert ist als ein einzelnes Montageende (62) zur Aufnahme des Bolzens (64),
einen Deckel (78), der abnehmbar an dem Anschlussgehäuse (32) angebracht ist, um den ersten Hohlraum (36) abgedichtet zu schließen, um die elektrische Sicherung (22) innerhalb des ersten Hohlraums (36) zu schützen, und
ein Halterungssystem (88), das den Deckel (78) und das Anschlussgehäuse (32) miteinander verbindet, um die Verbindung von Deckels (78) mit Anschlussgehäuse (32) aufrechtzuerhalten, wenn der Deckel (78) vom Anschlussgehäuse (32) gelöst wird, wobei das Halterungssystem (88) ein Halteband (90) umfasst, das an einem von dem Deckel (78) und dem Anschlussgehäuse (32) und an einen Befestigungshalter (92) montiert ist, der an dem anderen von dem Deckel (78) und dem Anschlussgehäuse (32) montiert ist.

2. Kabelbaumaufbau (20) nach Anspruch 1, wobei das Halteband (90) am Deckel (78) befestigt ist und der Befestigungshalter (92) am Anschlussgehäuse (32) montiert ist.

3. Kabelbaumaufbau (20) nach Anspruch 1, wobei das Halteband (90) eine Öffnung (100) definiert, die dazu ausgestaltet ist, um den Befestigungshalter (92) aufzunehmen.

4. Kabelbaumaufbau (20) nach Anspruch 1, der weiterhin ein Verriegelungssystem (104) aufweist, das dazu ausgestaltet ist, um den Deckel (78) selektiv am Anschlussgehäuse (32) zu sichern.

5. Kabelbaumaufbau (20) nach Anspruch 4, wobei das Verriegelungssystem (104) einen am Deckel (78) angeordneten Verschlussriegel (106) und eine am Anschlussgehäuse (32) angeordnete, den Verschlussriegel aufnehmende Komponente (108) aufweist, wobei der Verschlussriegel (106) und die den Verschlussriegel aufnehmende Komponente (108) in der Lage sind, miteinander gekoppelt zu werden, so dass der Deckel (78) selektiv am Anschlussgehäuse (32) gesichert wird.

6. Kabelbaumaufbau (20) nach Anspruch 1, der weiterhin ein Clipsystem (110) aufweist, das dazu ausgestaltet ist, um den Kabelbaumstecker (26) selektiv an der Steckerbuchse (38) zu sichern.

7. Kabelbaumaufbau (20) nach Anspruch 6, wobei das Clipsystem (110) einen Clip (112), der am Kabelbaumstecker (26) angeordnet ist, und eine den Clip aufnehmende Komponente (114) umfasst, die an der Steckerbuchse (38) angeordnet ist, wobei der Clip und die den Clip aufnehmende Komponente (114) dazu in der Lage sind, miteinander gekoppelt zu werden, so dass der Kabelbaumstecker (26) selektiv an der Steckerbuchse (38) gesichert wird.

8. Kabelbaumaufbau (20) nach Anspruch 1, wobei Steckerbuchse (38) eine oder mehrere Ausrichtungsrippen (116) aufweist und wobei das Steckergehäuse (28) eine oder mehrere den Ausrichtungsrippen (116) entsprechende Nuten (118) umfasst, wobei die Nuten (118) dazu ausgestaltet sind, die Ausrichtungsrippen (116) aufzunehmen, um die Steckerbuchse (38) und den Kabelbaumstecker (26) zum Eingriff auszurichten.

9. Kabelbaumaufbau (20) nach Anspruch 1, wobei der erste elektrische Verbindungskontakt (30) wenigstens eine vorgespannte Zinke (120) aufweist, die dazu ausgestaltet ist, den zweiten elektrischen Verbindungskontakt (72) aufzunehmen und selektiv festzuhalten, so dass die ersten und zweiten elektrischen Verbindungskontakte (30, 72) in elektrischer Verbindung in Eingriff gebracht sind.

10. Kabelbaumaufbau (20) nach Anspruch 1, wobei das Montageende (62) eine Öffnung (122) definiert, die dazu ausgestaltet ist, um den Bolzen (64) aufzunehmen.

11. Kabelbaumaufbau (20) nach Anspruch 1, wobei der Deckel (78) ein Dichtungselement (124) enthält, um eine wasserdichte Dichtung zwischen dem Deckel (78) und dem Anschlussgehäuse (32) zu ermöglichen.

12. Kabelbaumaufbau (20) nach Anspruch 1, der weiterhin einen Sicherungsabstandshalter (128) aufweist, der innerhalb des ersten Hohlraums (36) angeordnet ist, wobei der Sicherungsabstandshalter (128) definierte Fächer (130) aufweist, um die elektrische Sicherung (22) in Eingriff mit den ersten und zweiten sicherungskontaktierenden Enden (66, 76) zu führen.

## Revendications

1. Ensemble de faisceau de câbles (20) destiné à loger de manière fonctionnelle au moins un fusible électrique (22), ledit ensemble de faisceau de câbles (20) comprenant:
au moins un câble électrique (24);
une fiche de faisceau de câbles (26) montée sur ledit câble (24), ladite fiche de faisceau de câbles (26) comprenant un boîtier de faisceau (28) et un premier connecteur électrique (30);
un boîtier de bornes (32) comprenant:
un corps principal (34) comprenant une base (42), et comprenant en outre un premier côté (44) et un deuxième côté (46) espacés l'un de l'autre, ainsi qu'un troisième côté (48) et un quatrième côté (50) espacés l'un de l'autre, perpendiculaires au premier côté (44) et au deuxième côté (46), dans lequel le premier côté (44), le deuxième côté (46), le troisième côté (48) et le quatrième côté (50) s'étendent perpendiculairement à partir de ladite base (42), dans lequel ledit premier côté (44), ledit deuxième côté (46), ledit troisième côté (48), et ledit quatrième côté (50) forment collectivement une section transversale généralement rectangulaire s'étendant à partir de la base (42) pour définir le corps principal (34) et une première cavité (36) du corps principal (34), et
un réceptacle (38) comportant un côté supérieur (52) et un côté inférieur (54) espacés l'un de l'autre, un côté gauche (56) et un côté droit (58) espacés l'un de l'autre, perpendiculaires au côté supérieur (52) et au côté inférieur (54), dans lequel le côté supérieur (52), le côté inférieur (54), le côté gauche (56) et le côté droit (58) s'étendent perpendiculairement à partir dudit premier côté (44) dudit corps principal (34) et sont disposés à l'extérieur de ladite première cavité (36), dans lequel ledit côté supérieur (52), ledit côté inférieur (54), ledit côté gauche (56), et ledit côté droit (58) forment collectivement une section transversale généralement rectangulaire s'étendant depuis le premier côté (44) du corps principal (34) pour définir le réceptacle (38) et une deuxième cavité (40) du réceptacle (38);
une première borne (60) comprenant une extrémité de montage (62) s'étendant depuis ledit deuxième côté (46) dudit corps principal (34) et disposée à l'extérieur de ladite première cavité (36), ladite extrémité de montage (60) étant adaptée pour recevoir un goujon (64), et au moins une première extrémité de contact de fusible (66) disposée à l'intérieur de ladite première cavité (36) dudit boîtier de borne (32);
une pluralité de deuxièmes bornes (68) comprenant chacune une première extrémité définissant un deuxième connecteur électrique (72) s'étendant depuis ledit premier côté (44) dudit corps principal (34) et disposée à l'intérieur de ladite deuxième cavité (40) dudit boîtier de bornes (32), et au moins une deuxième extrémité de contact de fusible (76) disposée à l'intérieur de ladite première cavité (36) dudit boîtier de bornes (32);
dans lequel chacune desdites secondes extrémités de contact de fusible (76) est espacée des autres afin de recevoir une pluralité de fusibles électriques (22) et chacun desdits seconds connecteurs électriques (72) est espacé des autres;
dans lequel ladite première extrémité de contact de fusible (66) de ladite première borne (60) et ladite deuxième extrémité de contact de fusible (76) de ladite deuxième borne (68) sont positionnées à l'intérieur de ladite première cavité (36), parallèlement l'une à l'autre et face à face, pour recevoir le fusible électrique (22);
dans lequel ledit réceptacle (38) dudit boîtier de borne (32) reçoit ladite fiche de faisceau de câbles (26), lesdits premier et deuxième connecteurs électriques (30, 72) s'engageant l'un dans l'autre en communication électrique afin de coupler électriquement ledit câble (24) auxdites première et deuxième bornes (60, 68);
dans lequel ladite au moins une première extrémité de contact de fusible (66) est en outre définie comme une pluralité d'extrémités de contact de fusible (66), chacune desdites premières extrémités de contact de fusible (66) étant espacée des autres pour recevoir une pluralité de fusibles électriques (22), ladite pluralité desdites premières extrémités de contact de fusible (66) et ladite extrémité de montage (62) étant reliées d'un seul tenant; et
dans lequel ladite extrémité de montage (62) de ladite première borne (60) est en outre définie comme une seule extrémité de montage (62) destinée à recevoir ledit goujon (64); un couvercle (78) monté de manière amovible sur ledit boîtier de borne (32) afin de recouvrir de manière étanche ladite première cavité (36) pour protéger le fusible électrique (22) à l'intérieur de ladite première cavité (36); et
un système de retenue (88) reliant ledit couvercle (78) et ledit boîtier de borne (32) afin de maintenir la connexion dudit couvercle (78) audit boîtier de borne (32) lorsque ledit couvercle (78) est retiré dudit boîtier de borne (32), ledit système de retenue (88) comprenant une attache (90) montée sur l'un parmi ledit couvercle (78) et ledit boîtier de borne (32) et sur un dispositif de fixation (92) monté sur l'autre parmi ledit couvercle (78) et ledit boîtier de borne (32).

2. Ensemble de faisceau de câbles (20) tel que défini dans la revendication 1, dans lequel ladite attache (90) est fixée audit couvercle (78) et ladite fixation (92) est fixée audit boîtier de borne (32).

3. Ensemble de faisceau de câbles (20) selon la revendication 1, dans lequel ladite attache (90) définit une ouverture (100) configurée pour recevoir ladite fixation (92).

4. Ensemble de faisceau de câbles (20) selon la revendication 1, comprenant en outre un système de verrouillage (104) configuré pour fixer de manière sélective ledit couvercle (78) audit boîtier de bornes (32).

5. Ensemble de faisceau de câbles (20) selon la revendication 4, dans lequel ledit système de verrouillage (104) comprend un loquet (106) disposé sur ledit couvercle (78) et un élément de réception de loquet (108) disposé sur ledit boîtier de borne (32), dans lequel ledit loquet (106) et ledit élément de réception de loquet (108) peuvent être accouplés de telle sorte que ledit couvercle (78) soit fixé de manière sélective audit boîtier de borne (32).

6. Ensemble de faisceau de câbles (20) tel que défini dans la revendication 1, comprenant en outre un système de clip (110) configuré pour fixer de manière sélective ladite fiche de faisceau de câbles (26) audit réceptacle (38).

7. Ensemble de faisceau de câbles (20) selon la revendication 6, dans lequel ledit système de clip (110) comprend un clip (112) disposé sur ladite fiche de faisceau de câbles (26) et un élément de réception de clip (114) disposé sur ledit réceptacle (38), dans lequel ledit clip (112) et ledit élément de réception de clip (114) peuvent être accouplés de telle sorte que ladite fiche de faisceau de câbles (26) soit fixée de manière sélective audit réceptacle (38).

8. Ensemble de faisceau de câbles (20) tel que défini dans la revendication 1, dans lequel ledit réceptacle (38) comprend une ou plusieurs nervures d'alignement (116) et dans lequel ledit boîtier de faisceau (28) comprend une ou plusieurs rainures (118) correspondant auxdites nervures d'alignement (116), dans lequel lesdites rainures (118) sont configurées pour recevoir lesdites nervures d'alignement (116) afin d'aligner ledit réceptacle (38) et ladite fiche de faisceau de câbles (26) pour l'engagement.

9. Ensemble de faisceau de câbles (20) tel que défini dans la revendication 1, dans lequel ledit premier connecteur électrique (30) comprend au moins une broche précontrainte (120) configurée pour recevoir et retenir de manière sélective ledit deuxième connecteur électrique (72) de telle sorte que lesdits premier et deuxième connecteurs électriques (30, 72) soient engagés en communication électrique.

10. Ensemble de faisceau de câbles (20) selon la revendication 1, dans lequel ladite extrémité de montage (62) définit une ouverture (122) configurée pour recevoir ledit goujon (64).

11. Ensemble de faisceau de câbles (20) selon la revendication 1, dans lequel ledit couvercle (78) comprend un élément d'étanchéité (124) destiné à faciliter une étanchéité à l'eau entre ledit couvercle (78) et ledit boîtier de borne (32).

12. Ensemble de faisceau de câbles (20) tel que défini dans la revendication 1, comprenant en outre une entretoise de fusible (128) disposée à l'intérieur de ladite première cavité (36), ladite entretoise de fusible (128) comportant des compartiments définis (130) destinés à guider le fusible électrique (22) vers l'engagement avec lesdites premières et deuxièmes extrémités de contact de fusible (66, 76).
